# EUROPÄISCHE PATENTANMELDUNG

(11) **EP 0 580 990 A1**
(43) Veröffentlichungstag der Anmeldung: **02.02.1994**
(21) Anmeldenummer: 93108854.6
(22) Anmeldetag: 02.06.1993
(51) Int. Cl.: H04L 27/20, H04B 10/14

(54) **Optischer Sender für digitale Übertragungssignale**

(30) Priorität: 26.06.1992 DE 4221109
(71) Anmelder: SIEMENS AKTIENGESELLSCHAFT, D-80333 München (DE)
(72) Erfinder: Fischer, Uwe, Dipl.-Ing., W-8028 Taufkirchen (DE); Pietzsch, Joachim, Dr.-Ing., W-8000 München 70 (DE)

(57) **Zusammenfassung**

Herkömmliche Sender mit Direktintensitätsmodulation über den Injektionsstrom der Laserdiode besitzen i.a. eine unerwünschte Frequenzmodulation des emittierten Laserlichts. Erfindungsgemäß wird deshalb ein optischer Sender vorgeschlagen, dessen Licht zunächst frequenzmoduliert und diese (Frequenzmodulation mittels eines Mach-Zehnder Interferometers) in eine Intensitätsmodulation umgesetzt wird, wobei zur Regelung des Nullphasenwinkels zwischen den beiden Interferometerarmen die Laserdiode zusätzlich mit einem niederfrequenten Signal geringer Amplitude beaufschlagt wird.

## Beschreibung

Die Erfindung betrifft einen optischen Sender für digitale Übertragungssignale entsprechend dem Oberbegriff des Anspruchs 1.

Optische Sender für digitale Übertragungssignale erhalten gewöhnlich als aktives Element eine Laserdiode, deren Lichtintensität direkt über den Injektionsstrom mit dem digitalen Übertragungssignal moduliert wird. Dabei ergibt sich das Problem, daß insbesondere bei Bitraten von etwa 1 Gbit/s und höher die mit der Direktmodulation verbundenen Chirpeffekte bei der Signalübertragung über dispersive Strecken zu störenden Dispersionsverzerrungen führen. Die Chirpeffekte ergeben sich durch die Abhängigkeit der komplexen Brechzahl des Halbleitermaterials des Lasers von der sich unter Modulation ändernden Ladungsträgerdichte und weiterhin durch eine patternabhängige Temperaturmodulation des Lasers.

Aus "IEEE Photonics Technology Letters", Vol. 1, No. 8, vom August 1989, Seiten 218 bis 220 ist es bekannt, alternativ zur Amplitudenmodulation auch FM-, FSK- und insbesondere DPSK-Modulation zur optischen Übertragung hochratiger digitaler Signale zu verwenden. Zur direkten optischen DPSK-Modulation einer Laserdiode wird das elektrische Signal einem DPSK-Codierer und anschließend einem NRZ-Bipolar-Formatwandler zugeführt, der ein entsprechendes bipolares Signal mit sehr kurzen Impulslängen an die Laserdiode abgibt. Empfangsseitig ist die übertragende Glasfaser über ein Interferometer mit zwei Zweigen und einer Verzögerung zwischen beiden Zweigen von etwa 1 Bitperiode mit dem eigentlichen optischen Empfänger verbunden.

Voraussetzung für optimale Funktion des optischen Senders ist, daß die optische Wellenlänge des Laserlichts stets so gewählt ist, daß sich im Mach-Zehnder-Interferometer ein konstanter Nullphasenwinkel, also ein konstanter Phasenwinkel bei Nullmodulation zwischen den Lichtwellen der beiden Interferometerarme einstellt. Aufgrund von Drifterscheinungen wie beispielsweise Schwankungen der Wellenlänge des Laserlichtes und insbesondere thermisch bedingten Laufzeitänderungen im Mach-Zehnder-Interferometer muß dazu die Laserwellenlänge ständig nachgesteuert oder nachgeregelt werden. Dies kann bei Laboruntersuchungen durch manuelles Nachregeln des Injektionsstroms der Laserdiode erfolgen für eine Anwendung außerhalb des Laborbereichs ist aber ein optischer Sender notwendig, in dem der Nullphasenwinkel zwischen den Lichtwellen der beiden Interferometerarme automatisch eingeregelt wird.

Die Erfindung stellt sich nun die Aufgabe, einen derartigen Sender zu entwickeln, der hinsichtlich der benötigten Regeleinrichtung möglichst wenig aufwendig ist.

Erfindungsgemäß wird die Aufgabe durch einen optischen Sender der eingangs erwähnten Art gelöst, der durch die Merkmale des Kennzeichens des Patentanspruchs 1 weitergebildet ist. Die Erfindung macht sich dabei auch den Chirp-Effekt zu nutze, da durch diesen Effekt die Modulation des Injektionsstromes des Lasers eine Modulation der optischen Frequenz und/oder Phase des Laserlichts bewirkt, die durch ein als Phasen- bzw. Frequenzdiskriminator wirkendes Mach-Zehnder-Interferometer in eine Intensitätsmodulation umgesetzt wird. Von besonderem Vorteil ist die sich ergebende Verringerung des Chirps im Laserlicht gegenüber Direktintensitätsmodulation nach dem Stande der Technik, da bei dem erfindungsgemäßen Verfahren zur Erzielung des gewünschten Phasen- bzw. Frequenzhubs nur ein relativ geringer Modulationsgrad der Direktmodulation ausreicht, während es bei den bekannten Modulationsverfahren wegen des notwendigen hohen Modulationsgrades zu einer weitaus stärken Frequenzmodulation kommt.

Bevorzugte Weiterbildungen des erfindungsgemäßen optischen Senders sind in den Patentansprüchen 2 bis 8 näher beschrieben.

Die Erfindung soll im folgenden anhand eines in der Zeichnung dargestellten Ausführungsbeispiels näher erläutert werden.

Dabei zeigt:
- Fig. 1: das Blockschaltbild des erfindungsgemäßen optischen Senders und
- Fig. 2: den prinzipiellen Aufbau eines in Fig. 1 enthaltenen Lock-In-Verstärkers.

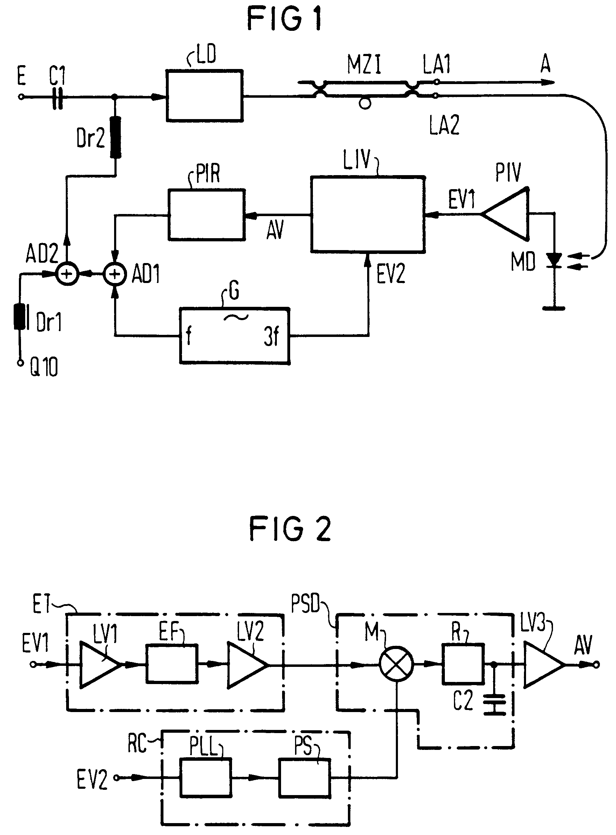

In der Figur 1 ist der Eingang E über einen ersten Kondensator C1 mit einem elektrischen Anschluß einer Laserdiode LD verbunden, an die optisch ein Mach-Zehnder-Interferometer MZI mit einem ersten und einem zweiten Interferometerarm angekoppelt ist. Der Anschluß LA1 des ersten Interferometerarms ist mit einem Ausgangsanschluß A und damit mit dem Eingangsanschluß einer Übertragungsstrecke verbunden, während an den Anschluß LA2 des zweiten Interferometerarms optisch eine Monitor-Photodiode MD angekoppelt ist. Die Monitor-Photodiode MD ist über einen nachgeschalteten Photostromverstärker PIV mit einem ersten Eingang EV1 Synchrondemodulator in Form eines handelsüblichen Lock-In-Verstärkers LIV verbunden, dessen zweiter Eingang EV2 mit einem Ausgangsanschluß eines Sinusgenerators G verbunden ist. Der Ausgangsanschluß AV des Lock-In-Verstärkers LIV ist ein Filter mit Tiefpaßverhalten oder über einen Regler PIR mit I-Anteil, insbesondere mit Proportional-Integral-Regelverhalten mit dem ersten Eingang eines ersten Analogaddierers AD1 verbunden, dessen zweiter Eingang an einen Ausgang des Sinusgenerators G angeschlossen ist. Der Ausgangsanschluß des ersten Analogaddierers AD1 ist mit dem ersten Eingang eines zweiten Analogaddierers AD2 verbunden, dessen zweiter Einganganschluß über eine erste Drossel Dr1 an eine Quelle QIO für den Laserdiodenvorstrom angeschlossen ist. Der Ausgangsanschluß des zweiten Analogaddierers AD2 ist über eine zweite Drossel Dr2 mit demjenigen elektrischen Anschluß der Laserdiode LD verbunden, an dem auch das digitale Übertragungssignal ansteht.

Das digitale Übertragungssignal liegt an der Laserdiode in amplitudenmodulierter Form vor und wird von der Laserdiode unter Ausnutzung des Chirpeffektes in phasen- bzw. frequenzmoduliertes Licht umgewandelt, das mit Hilfe des nachgeschalteten Mach-Zehnder-Interferometers mit einer Laufzeitdifferenz von üblicherweise einer Bitperiode des Übertragungssignals in intensitätsmoduliertes Licht umgesetzt wird. Die optische Wellenlänge des Laserlichts ist dabei so gewählt, daß sich im Mach-Zehnder-Interferometer ein konstanter Nullphasenwinkel, also ein konstanter Phasenwinkel bei Nullmodulation, zwischen den Lichtwellen der beiden Interferometerarme einstellen kann.

Zur Einregelung und Nachregelung der optischen Wellenlänge des Laserlichts dient die mit dem Ausgang LA2 für den zweiten Interferometerarm verbundene Regelanordnung, die ein Regelsignal erzeugt, das dem Vorstrom und dem Modulationsstrom der Laserdiode überlagert wird. Zur Erzeugung des Regelsignals wird ein vom Sinusgenerator G oder gegebenenfalls von einem Cosinusgenerator erzeugtes niederfrequentes Signal mit einer Frequenz von etwa 1 kHz und einer im Vergleich zum Übertragungssignal wesentlich kleineren Amplitude der Laserdiode zugeführt. Durch die Stromabhängigkeit der Laseremissionsfrequenz bewirkt dieses Sinussignal eine geringe Modulation der Nullphase des Laserlichts, welche durch das Mach-Zehnder-Interferometer in eine Intensitätsänderung umgesetzt wird. Dadurch treten bei der Frequenz des niederfrequenten Signals und bei allen Harmonischen dieser Frequenz Leistungsanteile im vom Mach-Zehnder-Interferometer abgegebenen Licht auf. Wie eine Reihenentwicklung des sich ergebenden Signals zeigt, dominiert dabei bei der n-ten Harmonischen jeweils ein Signalanteil, welcher proportional zur n-ten Ableitung des betrachteten Signals ist. Da nun ein Extremwert eingeregelt werden soll, sind nur die Signalanteile bei den ungeradzahligen Harmonischen nützlich, da diese an der betrachteten Stelle gerade eine vergleichsweise genaue einzuregelnde Nullstelle besitzt, während die geradzahligen Harmonischen wie das Signal selbst an dieser Stelle Extremwerte aufweisen, die vergleichsweise schlecht einzuregeln sind. Im vorliegenden Fall entsteht bei der n-ten Oberwelle ein Signalanteil, welcher proportional zur n-ten Ableitung der Lichtintensität nach der Nullphase ist. Wegen der geringen Amplitude stören die zusätzlich zum niederfrequenten Signal auftretenden Signalanteile die Übertragung des Nutzlichtes nicht. Der vom zweiten Interferometerarm an die Monitordiode MD abgegebene Lichtanteil enthält diese Signalanteile ebenfalls, die über dessen ersten Eingangsanschluß EV1 auch zum Lock-In-Empfänger LIV gelangen. Die Funktion des Lock-In-Empfängers ist im Zusammenhang mit der Figur 2 noch näher erläutert. Vom Lock-In-Empfänger wird wahlweise der Signalanteil bei der Grundfrequenz oder einer ungeradzahligen Harmonischen insbesondere der dritten Oberwelle des niederfrequenten Signals im gesamten Übertragungssignal ausgewertet und ein dem ermittelten Signalanteilpegel entsprechendes Regelsignal an den PI-Regler PIR abgegeben, der das Regelsignal für die Laserdiode erzeugt. Die Auswertung bei der dritten Oberwelle des niederfrequenten Signals wurde dabei aus folgenden Überlegungen heraus gewählt. Bei der ersten Oberwelle ist außer einem Signalanteil proportional zur ersten Ableitung noch ein gewisser Rest der unerwünschten - bei der Frequenzmodulation über den Injektionsstrom aber unvermeidlichen - Intensitätsmodulation der Laserdiode selbst verhanden. Da dieser Rest stören kann, wurde die dritte Oberwelle ausgewählt und damit die dritte Ableitung ausgewertet, da es bei dieser keine derartigen Störanteile gibt. Das Regelsignal wird im ersten Addierer AD1 mit dem niederfrequenten Signal und im zweiten Addierer AD2 mit dem Laserdiodenvorstrom kombiniert.

Die Regelung des Emissionstroms der Laserdiode und damit des Nullphasenwinkels im Mach-Zehnder-Interferometer beruht darauf, daß beim gewünschten Wert des Nullphasenwinkels die Intensität am Ausgang des Mach-Zehnder-Interferometers einen Extremwert annimmt, wobei je nachdem welcher der beiden Mach-Zehnder-Interferometerausgänge ausgewertet wird, ein Minimum oder ein Maximum auftreten kann. Der Extremwert selbst ist aber in seiner absoluten Größe sowohl von der von der Laserdiode ausgesendeten Lichtleistung als auch vom Phasenhub der Modulation, vom Grad der polarisationsrichtigen Überlagerung im Mach-Zehnder-Interferometer und auch noch von der Pulsform des Modulationssignals abhängig. Die Ermittlung des Extremwertes ist damit zunächst relativ schwierig, erfindungsgemäß wird der Extremwert deshalb dadurch eingeregelt, daß eine ungeradzahlige bevorzugt die dritte Ableitung der mittleren Intensität nach der Nullphase gebildet wird, da diese Ableitungen beim Extremwert Nulldurchgänge aufweisen.

Die dritte Ableitung der mittleren Intenstität nach der Nullphase wird mit Hilfe des in der Figur 2 näher dargestellten an sich handelsüblichen Lock-In-Verstärkers ausgewertet.

Die Figur 2 beruht dabei auf einer Firmenschrift der Princoton Applied Research Corporation von 1975: "A Lock-In Primer". In der Figur 4.1 dieser Veröffentlichung ist das vereinfachte Blockschaltbild eines Lock-In-Verstärkers dargestellt. Dabei ist mit dem Signaleingang, der hier als erster Eingang EV1 bezeichnet wird, ein Empfangsteil ET verbunden, das die Reihenschaltung eines ersten Signalverstärkers LV1, eines auf die Signalfrequenz abgestimmten Bandfilters EF und eines zweiten Signalverstärkers LV2 enthält. Das Ausgangssignal des zweiten Signalverstärkers wird an den einen Eingang eines Mischers M abgegeben, der in einer phasenempfindlichen Schaltung PSD enthalten ist. Mit dem zweiten Signaleingang EV2, der auch als Referenzeingang bezeichnet wird, ist eine Referenzschaltung RC verbunden, die die Reihenschaltung einer Phasenregelschleife PLL und eines Phasenschiebers PS enthält und deren Ausgangssignal an einen zweiten Eingang des Mischers M abgegeben wird. Das Ausgangssignal des Mischers M ist über ein RC-Tiefpaßfilter mit einem dritten Signalverstärker LV3 verbunden, dessen Ausgangsanschluß den Ausgang AV des Lock-In-Verstärkers darstellt. Die Frequenz des Signals am zweiten Eingangsanschluß EV2 entspricht der Frequenz des Signals, das in dem dem ersten Eingang EV1 zugeführten Signalgemisch enthalten ist und dessen Amplitude bestimmt werden soll. Das Referenzsignal wird in der Phasenregelschleife PLL in ein Rechteckwellensignal umgewandelt, dessen Phase durch den Phasenschieber PS präzis der Phase des zu bestimmten Signals angepaßt wird. Der Lock-In-Verstärker stellt damit einen Resonanzempfänger dar, der beim erfindungsgemäßen optischen Sender zur Ermittlung der Amplitude des niederfrequenten Signals im Ausgangssignal des Mach-Zehnder-Interferometers dient. Die Funktion von Lock-In-Verstärkern ist auch im Elektronik-Arbeitsblatt Nr. 168 in Elektronik 2 vom 25.01.1985, Seiten 67 bis 70 beschrieben.

## Patentansprüche

1. Optischer Sender für digitale Übertragungssignale mit einer Laserdiode und einem nachgeschaltetem Mach-Zehnder-Interferometer mit einer Laufzeitdifferenz der beiden Interferometerarme von etwa einer Bitperiode des digitalen Übertragungssignals und einem Anschluß der Übertragungsstrecke an einem Interferometerausgangsarm,
**dadurch gekennzeichnet**,
daß die Laserdiode frequenz- und/oder phasenmoduliertes Licht enthält,
daß zur Regelung eines konstanten Nullphasenwinkels, also eines konstanten Phasenwinkels bei Nullmodulation, zwischen den beiden sich in dem Mach-Zehnder Interferometer überlagernden Teillichtwellen die Laserdiode (LD) zusätzlich mit einer Quelle (G) für ein im Vergleich zum Übertragungssignal niederfrequentes Signal geringer Amplitude verbunden ist, daß mit dem Ausgangsanschluß eines der Interferometerausgangsarme (LA1, LA2) eine Photodiode (MD) mit nachgeschaltetem Photostromverstärker (PIV) verbunden ist und daß ein Synchrondemodulator (LIV) für das niederfrequente Signal vorgesehen ist, dessen erster Eingang (EV1) mit dem Ausgang des Photostromverstärkers (PIV) und dessen zweiter Eingang (EV2) mit der Quelle (G) für das niederfrequente Signal und dessen Ausgang über ein Filter mit Tiefpaßverhalten (PIR) mit der Laserdiode (LD) verbunden ist.

2. Optischer Sender nach Patentanspruch 1,
**dadurch gekennzeichnet**,
daß als Quelle (6) für das niederfrequente Signal ein Sinusgenerator vorgesehen ist.

3. Optischer Sender nach Patentanspruch 1,
**dadurch gekennzeichnet**,
daß die Photodiode (MD) mit dem Ausgang (LA2) des zweiten Interferometerarms verbunden ist.

4. Optischer Sender nach Patentanspruch 1,
**dadurch gekennzeichnet**,
daß als Synchrondemodulator ein handelsüblicher Lock-In-Verstärker (LIV) vorgesehen ist.

5. Optischer Sender nach Patentanspruch 1,
**dadurch gekennzeichnet**,
daß als Filter mit Tiefpaßverhalten ein Regler mit I-Anteil, insbesondere ein PI-Regler vorgesehen ist.

6. Optischer Sender nach Patentansprüchen 1, 2 oder 5,
**dadurch gekennzeichnet**,
daß mit dem Ausgang des PI-Reglers (PIR) der erste und mit dem Ausgang des Sinusgenerators (G) der zweite Eingang eines ersten Analogaddierers (AD1) verbunden ist, daß der Ausgang dieses ersten Analogaddierers mit einem ersten Eingang eines zweiten Analogaddierers (AD2) verbunden ist,
dessen zweiter Eingang mit einer Quelle (QIO) für den Laserdiodenvorstrom und der Ausgang des zweiten Analogaddierers (AD2) mit einem Eingang (ENS) für das digitale Übertragungssignal und mit einem Anschluß der Laserdiode (LD) verbunden ist.

7. Optischer Sender nach Patentansprüchen 1 oder 4,
**dadurch gekennzeichnet**,
daß der Lock-In-Verstärker (LIV) auf eine ungeradzahlige Oberwelle des niederfrequenten Signals abgestimmt ist.

8. Optischer Sender nach Patentanspruch 7,
**dadurch gekennzeichnet**,
daß der Lock-In-Verstärker (LIV) auf die dritte Oberwelle des niederfrequenten Signals abgestimmt ist.
